# EUROPEAN PATENT APPLICATION

(11) **EP 3 432 618 A1**
(43) Date of publication of application: **23.01.2019**
(21) Application number: 17305957.7
(22) Date of filing: 18.07.2017
(51) Int. Cl.: H04W 4/22, H04L 12/18, H04L 12/28, H04N 21/00, H04W 8/00, H04W 76/00, H04W 76/02

(54) **EMERGENCY ALERT RELAYING USING SHORT RANGE ACCESS COMMUNICATION DEVICES**

(71) Applicant: Thomson Licensing, 92130 Issy-les-Moulineaux (FR)
(72) Inventor: MS, Zameerun, 620008 Tiruchirappalli (IN); PARTHASARATHY, Shanmugasarathy, 600020 Chennai (IN)
(74) Representative: Huchet, Anne

(57) **Abstract**

A method and apparatus are described including receiving content at a network access device and if the received content includes a message, scanning a local area to discover and identify at least one available short range access communication device within a range of the network access device.

## Description

### FIELD

The proposed method and apparatus relate to relaying or propagating emergency alerts received in content using short range access communications such as Bluetooth, Zigbee and the like. The content may be provided by a broadcast content provider, a cable content provider, a satellite content provider, IPTV, over the top (OTT) or any other means to provide content.

### BACKGROUND

In multicast and broadcast applications, data are transmitted from a server to multiple receivers over wired and/or wireless networks. A multicast system as used herein is a system in which a server transmits the same data to multiple receivers simultaneously, where the receivers form a subset of all the receivers up to and including all of the receivers. A broadcast system is a system in which a server transmits the same data to all of the receivers simultaneously. That is, a multicast system by definition can include a broadcast system.

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

The Emergency Alert System (EAS) is a national warning system in major countries. EAS notification plays a major role in avoiding loss of valuable human life during natural disasters and other man-made disasters. Network access devices such as set top boxes (STBs) and gateways employed in the environment, play a major role in conveying EAS messages to occupants of an environment. The environment may be a home, school, business etc.

Short range access communication devices such as Bluetooth, Zigbee, Zwave, RF4CE, Lora, Thread, NarrowBand-Internet of Things (NB-IOT) or 6LoWPAN and the like to transmit (relay, propagate) an emergency alert to people in the environment. ZigBee is an IEEE 802.15.4-based specification for a suite of high-level communication protocols used to create personal area networks with small, low-power digital radios. 6LoWPAN is an acronym for *IPv6 over Low power Wireless Personal Area Networks.* RF4CE is a ZigBee application profile. Thread is an Internet of Things (IoT) home automation protocol. NarrowBand IoT is a Low Power Wide Area Network (LPWAN) radio technology standard that has been developed to enable a wide range of devices and services to be connected using cellular telecommunications bands.

Short range access communication devices are everywhere today. These shortrange access communication devices can play a major role in conveying the emergency alert to everyone in the environment and thereby stop a major loss of human lives. A network access device plays a major role in delivering the emergency messages (signals) to the environment. Since a network access device is not switched ON all the time and users need not be in the same room as the network access device (or might be sleeping in another room), the user might miss the broadcast (televised) EAS message.

During emergency situations such as natural calamities or disasters, it is possible that electricity and mobile networks may be unavailable. In such cases, propagating emergency alert messages becomes impossible.

One conventional system for broadcasting EAS messages is Comcast's DLNA client. In this system, the communication is between a server STB and a client STB through DLNA. The communication is only between two STBs (server STB and client STB) and does not work if either STB is in standby (asleep) mode.

### SUMMARY

A first aspect of the proposed method and apparatus addresses the situations where the person is not nearby a network access device or not watching TV by communicating the emergency alert message to nearby short range access communication devices. A second aspect of the proposed method and apparatus also provides a way of relaying or propagating the message and/or emergency alert message (signal) received from unknown short range access communication devices to other unknown short range access communication devices in the vicinity. It should be noted that as used herein emergency alert messages include EAS messages, which are usually weather related, as well as alerts about earthquakes, volcano eruptions, prisoner escapes, Silver alerts, Amber alerts, terrorist attacks and the like.

In addressing the situation (second aspect) when a natural disaster has occurred, relaying emergency alert messages using smart devices that possess short range access communication capabilities is proposed. The issue is how to continue spreading emergency alert messages to as many individuals as possible in such a natural disaster. Frequently, an emergency alert message might be forwarded to known nearby devices having short range access communications capabilities but the emergency alert messages may not be forwarded any further, for example, to other unknown nearby devices having short range access communications capabilities. Such a solution would be the technical equivalent of a call list and effectively continue the relaying cycle.

Upon receiving an emergency alert message, a short range access communication module in the network access devices transmits the emergency alert message to nearby short range access communication devices. The network access devices transmit only after the following conditions are met:
1. Network access device is in standby mode
2. A pop-up menu will be shown if the display device (TV) is not in STANDBY mode, asking to start or cancel broadcasting of a received emergency alert message to nearby short range access communication devices. If no response is received within the stipulated time, then short range access communication broadcast is started.

In a first aspect, a method is described including receiving content at a network access device and if the received content includes a message, scanning a local area to discover and identify at least one available short range access communication device within a range of the network access device.

In an embodiment, the content is a message, the message being received during a disaster or the message being an emergency alert message provided by a content provider, wherein the disaster is related to one of weather, a volcano eruption, an earthquake, a wild fire, a terrorist attack and a prisoner escape, and wherein the emergency alert message is related to one of weather, a volcano eruption, an earthquake, a wild fire, a terrorist attack, a prisoner escape, an Amber alert and a Silver alert.

In an embodiment, the method further includes generating a list of the discovered and identified short range access communication devices within the range of the network access device and transmitting information associated with the message to the at least one of the short range access communication devices within the range of the network access device.

In an embodiment, the method further includes generating a pairing request, providing an indication of the emergency alert message in the pairing request, transmitting the pairing request, to the at least one identified short range access communications devices within the range of the network access device, if pairing is required by the at least one of the short range access communications devices and receiving an acknowledgement of the pairing request.

In an embodiment, the method further includes un-pairing the discovered and identified short range access communication device if the discovered and identified short range access communication device required pairing and was previously paired and has not yet been un-paired.

In an embodiment, the method further includes displaying a pop-up dialog box for user input if the network access device is not in a standby mode.

In an embodiment, the information is not transmitted if, upon accessing a profile of the user, a determination is made that the user does not want to receive the information during a current time period.

In an embodiment, the discovered and identified short range access communication device is a home automation device and the information is transmitted to the home automation device, which conveys the information to the user by causing the home automation device to behave in a particular manner.

In an embodiment, the discovered and identified short range access communication device is a device specifically configured for a user having a disability and the information is transmitted to the specifically configured device, which conveys the information to the user by causing the home automation device to behave in a particular manner.

In an embodiment, the scanning is subject to a timeout.

In another aspect, an apparatus is described including means for receiving content at a network access device and means for scanning a local area to discover and identify at least one available short range access communication device within a range of the network access device, if the received content includes a message.

In an embodiment, the apparatus further includes means for generating a list of the discovered and identified short range access communication devices within the range of the network access device and means for transmitting information associated with the message to the at least one of the short range access communication devices within the range of the network access device.

In an embodiment, the apparatus further includes means for generating a pairing request, means for providing an indication of the emergency alert message in the pairing request, means for transmitting the pairing request, to the at least one identified short range access communications devices within the range of the network access device, if pairing is required by the at least one of the short range access communications devices, means for receiving an acknowledgement of the pairing request and means for un-pairing the discovered and identified short range access communication device if the discovered and identified short range access communication device required pairing and was previously paired and has not yet been un-paired.

In an embodiment, the content provider is one of a cable content provider, a satellite content provider, a broadcast content provider, IPTV and over-the-top provider.

In another aspect, a method is described including receiving content from a content provider at a network access device and if the received content includes an emergency alert message, scanning a local area to discover and identify at least one available short range access communication device within a range of the network access device.

In an embodiment, the method further includes generating a list of the discovered and identified short range access communication devices within the range of the network access device and transmitting information associated with the emergency alert message to the at least one of the short range access communication devices within the range of the network access device.

In an embodiment, the content provider is one of a cable content provider, a satellite content provider, a broadcast content provider, IPTV and over-the-top provider.

In an embodiment, the method further includes displaying a pop-up dialog box for user input if the network access device is not in a standby mode.

In an embodiment, the information is not transmitted if, upon accessing a profile of the user, a determination is made that the user does not want to receive the information during a current time period.

In an embodiment, the discovered and identified short range access communication device is a home automation device and the information is transmitted to the home automation device, which conveys the information to the user by causing the home automation device to behave in a particular manner.

In an embodiment, the discovered and identified short range access communication device is a device specifically configured for a user having a disability and the information is transmitted to the specifically configured device, which conveys the information to the user by causing the home automation device to behave in a particular manner.

In an embodiment, the emergency alert message is related to one of weather, a volcano eruption, an earthquake, a wild fire, a terrorist attack, a prisoner escape, an Amber alert and a Silver alert, wherein transmission of the information regarding Amber or Silver alerts depends upon time of day restrictions in the user profile.

In an embodiment, the scanning is subject to a timeout.

In an embodiment, the method further includes generating a pairing request, transmitting the pairing request, to the at least one identified short range access communications devices within the range of the network access device, if pairing is required by the at least one of the short range access communications devices and receiving an acknowledgement of the pairing request.

In an embodiment, the method further includes providing an indication of the emergency alert message in the pairing request.

In an embodiment, the method further includes un-pairing the discovered and identified short range access communication device if the discovered and identified short range access communication device required pairing and was previously paired and has not yet been un-paired.

In another aspect, an apparatus is described including means for receiving content from a content provider at a network access device and means for scanning a local area to discover and identify at least one available short range access communication device within a range of the network access device, if the received content includes an emergency alert message.

In an embodiment, the apparatus further includes means for generating a list of the discovered and identified short range access communication devices within the range of the network access device and means for transmitting information associated with the emergency alert message to the at least one of the short range access communication devices within the range of the network access device.

In an embodiment, the apparatus further includes means for displaying a pop-up dialog box for user input if the network access device is not in a standby mode.

In an embodiment, the apparatus further includes means for generating a pairing request means for transmitting the pairing request, to the at least one identified short range access communications devices within the range of the network access device, if pairing is required by the at least one of the short range access communications devices and means for receiving an acknowledgement of the pairing request.

In an embodiment, the apparatus further includes means for providing an indication of the emergency alert message in the pairing request.

In an embodiment, the apparatus further includes means for un-pairing the discovered and identified short range access communication device if the discovered and identified short range access communication device required pairing and was previously paired and has not yet been un-paired.

In an embodiment, the apparatus is a network access device.

In another aspect, a method is described including receiving a message at a smart device during a disaster, the smart device having short range access communication capabilities and scanning a local area to discover and identify at least one available short range access communications within a range of the smart device.

In an embodiment, the method further includes generating a list of the discovered and identified short range access communication devices within the range of the smart device and transmitting information associated with the message to the at least one of the short range access communication devices within the range of the smart device.

In an embodiment, the information is not transmitted if, upon accessing a profile of the user, a determination is made that the user does not want to receive the information during a current time period.

In an embodiment, the disaster is related to one of weather, a volcano eruption, an earthquake, a wild fire, a terrorist attack and a prisoner escape.

In an embodiment, the scanning is subject to a timeout.

In an embodiment, the method further incudes generating a pairing request, transmitting the pairing request, to the at least one identified short range access communications devices within the range of the network access device, if pairing is required by the at least one of the short range access communications devices and receiving an acknowledgement of the pairing request.

In another aspect, an apparatus is described including means for receiving a message at a smart device during a disaster, the smart device having short range access communication capabilities and means for scanning a local area to discover and identify at least one available short range access communications within a range of the smart device.

In an embodiment, the apparatus further includes means for generating a list of the discovered and identified short range access communication devices within the range of the smart device and means for transmitting information associated with the message to the at least one of the short range access communication devices within the range of the smart device.

In an embodiment, the means for scanning is subject to a timeout.

In an embodiment, the apparatus further includes means for generating a pairing request, means for transmitting the pairing request, to the at least one identified short range access communications devices within the range of the network access device, if pairing is required by the at least one of the short range access communications devices and means for receiving an acknowledgement of the pairing request.

In an embodiment, the apparatus is a smart device.

### BRIEF DESCRIPTION OF THE DRAWINGS

The proposed method and apparatus is best understood from the following detailed description when read in conjunction with the accompanying drawings. The drawings include the following figures briefly described below:
Fig. 1 is a flowchart of an exemplary embodiment of the proposed emergency alert propagation method.
Fig. 2 is a block diagram of an exemplary embodiment of the proposed emergency alert message apparatus.
Fig. 3 is a flowchart of an exemplary embodiment of a second aspect of the proposed method.

It should be understood that the drawing(s) are for purposes of illustrating the concepts of the disclosure and is not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The short range access communications module in the network access device scans the nearby devices, loops through (searches) the nearby devices one by one and does one of the following actions with a timeout.
1. Sends pairing request if necessary. Some short range access communication devices do not require pairing.
2. Sends brief details (information associated with the emergency alert message) through a message or file transfer (pre-recorded audio/video/text file).

If the discovered device is determined to be already paired, then re-pairing will not work. The device must be un-paired and then a new pairing request can be transmitted. It should be noted that some short range access communications devices may not require pairing. In the case where no pairing is required, the pairing steps are skipped.

Having a timeout helps to move to the next short range access communication devices in the list without getting stuck on any single recipient. This increases the possibility to reach more people. On completion of notifying all of the short range access communication devices in the loop; do a rescan/discover, looking for any new short range access communication devices and notify the new short range access communication devices with the proposed propagation (relaying, notification) method.

Every user can have profile settings which will restrict the relaying of messages. The user can
1. enable/disable the relaying
2. can set the time frame at which the user can allow the relaying.

A user profile is especially helpful in the situation where a person in the environment works nights and sleeps during the day and the alert is a Silver or Amber alert. Unless the subject of the Silver or Amber alert is in a person's immediate family, if the person is asleep then they may not want to receive such alerts as opposed to other alerts such as weather, volcano eruptions, earthquakes, prisoner escapes etc. in the area, which are a severe threat to everyone in the area no matter the time of day or whether the people in the environment are awake or asleep. That is, the user profile could allow a user to specify what type of optional alerts (Silver, Amber) the user(s) want to receive and during what time period they are willing to receive the emergency alerts.

The proposed method and apparatus eliminates the risk of an emergency alert message being ignored during times of an emergency where the user has either kept the network access device in STANDBY or is away from the network access device (in another room, sleeping etc.). The proposed method and apparatus increases the chances (probability) of emergency alert messages not being missed. Thereby, taking precautionary measures without any delay. Also, these emergency alert messages can be propagated to help people who are stranded in a situation where there is no way to receive an emergency alert message through a mobile network or other means, by propagating the emergency alert message through nearby short range access communication devices.

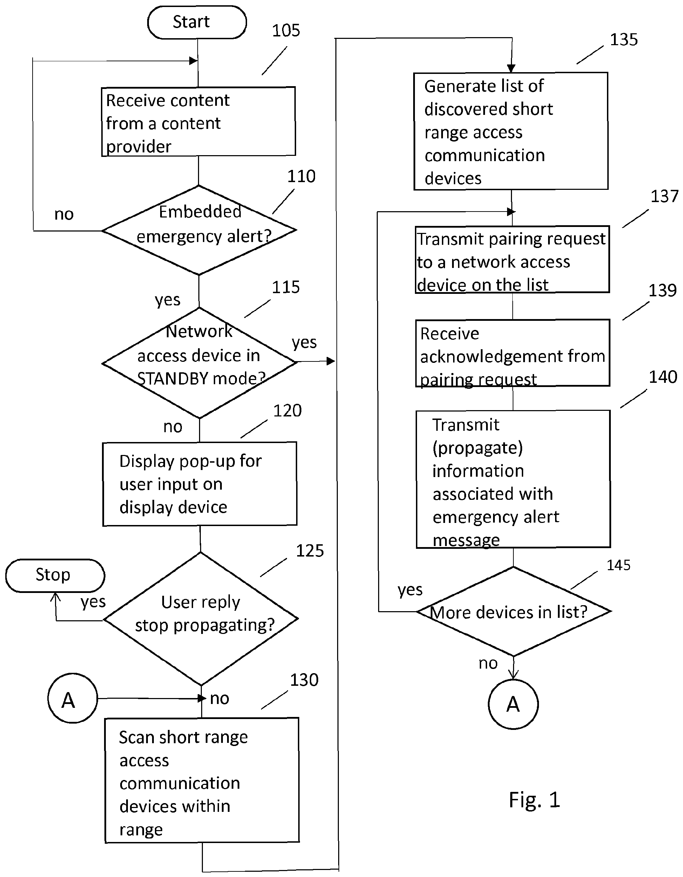

Fig. 1 is a flowchart of an exemplary embodiment of the proposed emergency alert propagation method. At 105 the network access device receives content from a content provider. A test is performed at 110 to determine if an emergency alert message is embedded in the content. If an emergency alert message is not embedded in the content then processing returns to 105. If an emergency alert message is embedded in the content then a test is performed at 115 to determine if the network access device is in STANDBY mode. If a user is watching content on a display device, then the content is coming to the display device through the network access device. Thus, if the user is asleep or not watching content for some other reason, the network access device is in STANDBY mode. If the network access device is in STANDBY mode then processing proceeds to 130. If the network access device is not in STANDBY mode then at 120 a pop-up message is displayed on the display device asking the user/viewer if the user/viewer wants the emergency alert message propagated. The user/viewer may be the only person in the environment and if the user/viewer is watching content on the display device then the emergency alert message would have already been displayed so it need not be propagated further. At 125 a test is performed to determine if the user replied to the pop-up message to stop or not to propagate the emergency alert message or the user/viewer did not reply. A reply to the pop-up message is expected within a short time interval. If the user replied to the pop-up message to stop or not to propagate the emergency alert message then processing stops. If the user replied to the pop-up message to proceed or to propagate the emergency alert message or did not reply to the pop-up message then at 130, a scan is performed to identify and discover short range access communications devices in the vicinity (within communications range of the network access device). At 135 a list of identified and discovered short range access communications devices in the vicinity is generated. At 137, the network access device generates a pairing request (if necessary) and transmits a pairing request to a device on the list of short range access communications devices within the range of the network access device. The pairing request includes information about the nature of the emergency alert message. It should be noted that some short range access communications devices do not require pairing. In this case, the pairing request at 137 may be skipped. At 139, the network access device receives an acknowledgement from the pairing request. It should be noted that some short range access communications devices do not require pairing. In this case, since the pairing at 137 was skipped, the acknowledgement at 139 is also skipped.

At 140 information about the emergency alert message is transmitted to at least one of the identified and discovered short range access communications devices in the vicinity. At 145, a test is performed to determine if there are more short range access communication devices on the list. If there are more short range access communication devices on the list then the previous pairing is cancelled and processing proceeds to 137. It should be noted that some short range access communications devices do not require pairing. In this case, if there was no pairing then there needs to be no un-pairing or cancellation of any previous pairing. If there are no more short range access communication devices on the list then processing proceeds to 130 to see if there are any new short range access communications devices within the range of the network access device that have entered the area (range) since the last scan was performed.

Prior to execution of the proposed method shown in Fig. 1 and described above, the user/viewer will be prompted during set up of the network access device to provide a user profile. Data/information for the user profile can be entered using a variety of devices or components including various remote control devices or via another input device such as a tablet or keyboard for data entry or through a data carrier such as a flash drive or smart card. The user profile should include information/data for every responsible user/viewer who is generally in the environment. A responsible user/viewer would, for example, not include a child below a certain age. Other information/data might include which emergency alert messages the user/viewer does not wish to receive and/or a time of day or time period that the user does not want to receive emergency alert messages and which emergency alert messages the user/viewer does not want to receive during a particular time period. Before step/act 140 is executed, access to the user profile, which is stored in memory would be made and the particular emergency alert message and the time of day or time period would be tested to see if the user/viewer wanted to receive the particular emergency alert message and if the time of day or time period was when the user/viewer agreed to receive the particular emergency alert message. The user profile might also include information/data about any disabled, e.g., hearing impaired or blind people in the environment so that alternative signaling methods could be used such as strobe lights for a hearing impaired person and an audio (voice) emergency alert message for a blind person.

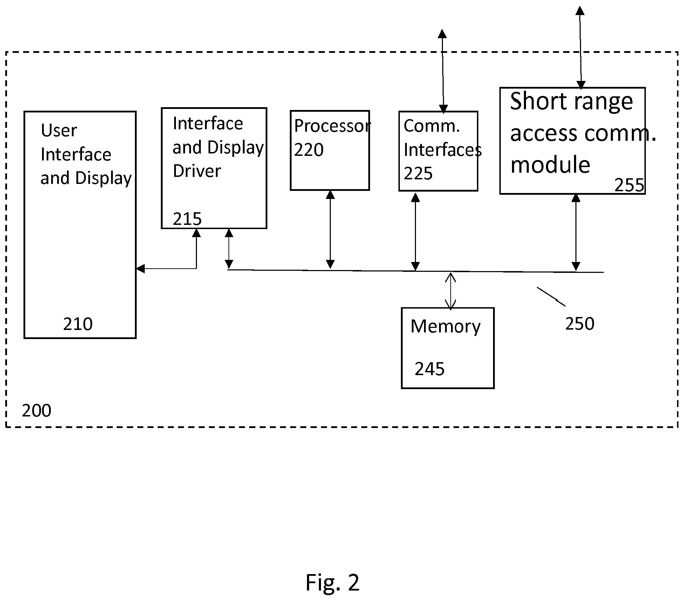

Fig. 2 is a block diagram of an exemplary embodiment of a network access device 200 for practicing the proposed method. The block diagram configuration includes a bus-oriented 250 configuration interconnecting a processor (processing unit) 220, and a memory 245. The configuration of Fig. 2 also includes a communication interface 225. The communication interface 225 may be wired or wireless and may in fact, include two interfaces - one for wired line communication and one for wireless communication. A second wireless communications module 255 is for short range access communications. User interface and display 210 is driven by interface circuit 215. The short range access communications interface 255 is in communication with the remaining components (modules) in the network access device through the bus 250.

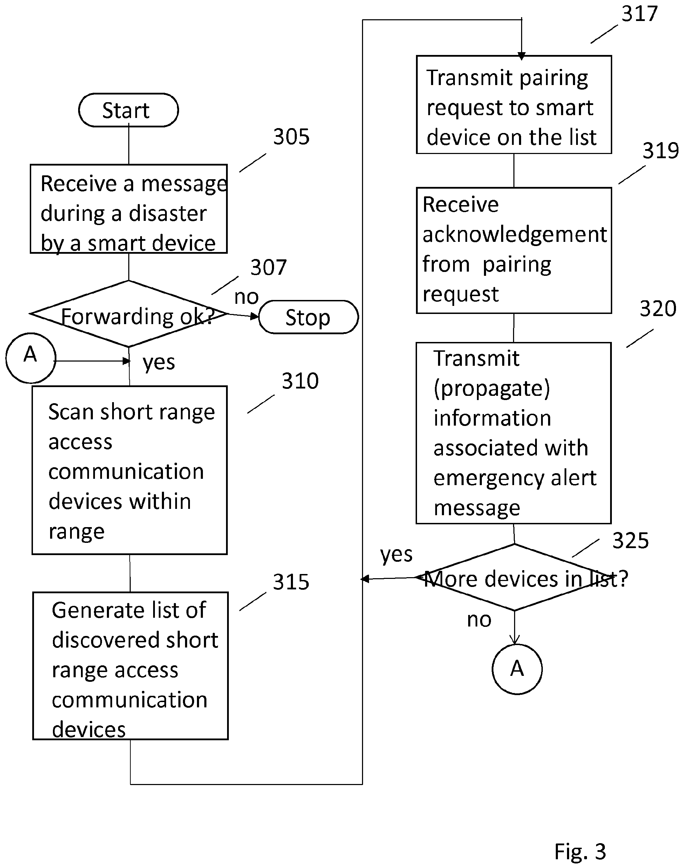

Processor 220 provides computation functions for the network access device, such as depicted in Figs. 1 or 3. The processor 220 can be any form of CPU or controller that utilizes communications between elements of the network access device to control communication and computation processes. Those of skill in the art recognize that bus 250 provides a communications path between the various elements of embodiment 200 and that other point-to-point interconnection options (e.g. non-bus architecture) are also feasible.

Any or all of the functionality included in the network access device may be embodied as application specific integrated circuits (ASICs), field programmable gate arrays (FPGAs), reduced instruction set computers (RISCs) or any other equivalent separate type of co-processor integrated into processor 220.

Memory 245 can act as a repository for memory related to any of the methods that incorporate the functionality of the network access device. Memory 245 can provide the repository for storage of information such as program memory, downloads, uploads, or scratchpad calculations. Those of skill in the art will recognize that memory 245 may be incorporated all or in part of processor 220. Communication interface 225 has both receiver and transmitter elements for wired line or wireless communications. Short range access communication module 255 has both a receiver and transmitter (or transceiver) for short range access communications as known to those of skill in the art. Program instructions for operation of the processor of the network access device may be in memory 245 or may be in processor.

The processing in accordance with the method shown in Figs. 1 and 3 is predominantly performed in the short range access communications module 255 and the processor 220. The processor performs the steps/acts of the method but the reception and transmission between the network access device 200 and the discovered short range access communications devices is through the short range access communications module 255.

Another aspect of the proposed method and apparatus is if the short range access communications protocol is a home automation protocol then it might be possible to access certain devices in the environment, for example, an alarm clock. The alarm clock could be triggered to ring or flash to notify the user/viewer of the emergency alert message or perhaps ring different tones for different types of emergency alert messages. Another possibility is to signal hearing impaired individuals using the strobe light of a hearing impaired fire detection device.

When a smart device possessing short range access communications capabilities receives an emergency alert message during, for example, a natural disaster, then the smart device processes the emergency alert message that has been received. After processing, the smart device applies the user settings and decides whether to relay the message or not. If the user settings allow the emergency alert message to be relayed then the smart device scans all the devices nearby and relays the emergency alert message to next level of scanned nearby devices. The user profile is used to store user settings, thus, the use of a user profile applies here as well. A user can select to relay or not to relay the emergency alert messages. The user can also select the type of emergency alert messages he/she wishes or is willing to relay. For example, in such situations many people may be looking for missing family members. Thus, the message may be a message as a result of an emergency but may not be exactly an emergency alert message in that the emergency may have already occurred or be continuing but the message may be a search, for example, for missing family members. The message received in such a situation is from a known or unknown device which will be propagated (based on user settings in the user profile) to next level of all known/unknown device nearby and this cycle continues.

Thus, as a first step, a smart device receives a message during an emergency such as a natural disaster or any kind of emergency from a known or unknown source. Next, the smart device validates the various user settings in the user's profile to process (relay) the message. If the user settings in the user profile allow the message to be relayed, then the smart device scans for all the smart devices in a range of the smart device that have short range access communications capabilities and relays the message. If the user settings in the user profile do not allow the message to be relayed, then the message is not relayed.

Fig. 3 is a flowchart of an exemplary embodiment of a second aspect of the proposed method. At 305 a smart device receives a message during a disaster. At 307 access to the user profile, which is stored in memory is made and the particular message and/or emergency alert message and the time of day or time period would be tested to see if the user/viewer wanted to receive the particular message and/or emergency alert message type and if the time of day or time period was when the user/viewer agreed to receive the particular message and/or emergency alert message. If the user profile, indicates that such messages and/or emergency alert messages are not to be forwarded or not to be forwarded at this time then there is no reason to proceed so processing stops. Reception of a message and/or an emergency alert message during or shortly after a disaster by a smart device from another smart device (which has received from another smart device or network access device) or network access device can continue for an infinite number of levels/layers until there is no more forwarding possible or permitted. Any single smart device would only participate at a single level/layer. This single layer/level of participation is described above. At 310, a scan is performed to identify and discover short range access communications devices in the vicinity (within communications range of the smart device). At 315 a list of identified and discovered short range access communications devices in the vicinity is generated. At 317, the smart device generates a pairing request (if necessary) and transmits a pairing request to a device on the list of short range access communications devices within the range of the smart device. The pairing request includes information about the nature of the emergency alert message. It should be noted that some short range access communications devices do not require pairing. In this case, the pairing request at 317 may be skipped. At 319, the smart device receives an acknowledgement from the pairing request. It should be noted that some short range access communications devices do not require pairing. In this case, since the pairing at 317 was skipped, the acknowledgement at 319 is also skipped.

At 320 information about the message is transmitted to at least one of the identified and discovered short range access communications devices in the vicinity. At 325, a test is performed to determine if there are more short range access communication devices on the list. If there are more short range access communication devices on the list then processing proceeds to 317.

It should be noted that some short range access communications devices do not require pairing. In this case, if there was no pairing then there needs to be no un-pairing or cancellation of any previous pairing. If there are no more short range access communication devices on the list then processing proceeds to 310 to see if there are any new short range access communications devices within the range of the network access device that have entered the area (range) since the last scan was performed. If there are more short range access communication devices on the list then the previous pairing is cancelled and processing proceeds to 317.

Prior to execution of the proposed method shown in Fig. 3 and described above, the user/viewer will be prompted during set up of the smart device to provide a user profile. Other information/data might include which messages and/or emergency alert messages the user/viewer does not wish to receive and/or a time of day or time period that the user does not want to receive messages and/or emergency alert messages and which messages and/or emergency alert messages the user/viewer does not want to receive during a particular time period.

The smart device configuration would be very similar to the configuration shown in Fig. 2 for a network access device and similarly described.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

For purposes of this application and the claims, using the exemplary phrase "at least one of A, B and C," the phrase means "only A, or only B, or only C, or any combination of A, B and C."

## Claims

1. A method, said method comprising:
receiving (105, 305) content at a network access device; and
if said received content includes a message, scanning (130, 310) a local area to discover and identify at least one available short range access communication device within a range of said network access device.

2. The method according to claim 1, wherein said content is a message, said message being received during a disaster or said message being an emergency alert message provided by a content provider.

3. The method according to claim 1 or 2, further comprising:
generating (135, 315) a list of said discovered and identified short range access communication devices within the range of said network access device; and
transmitting (140, 320) information associated with said message to said at least one of the short range access communication devices within the range of said network access device.

4. The method according to claim 2, further comprising:
generating (137, 317) a pairing request;
providing (137, 317) an indication of said emergency alert message in said pairing request;
transmitting (137, 317) said pairing request, to said at least one identified short range access communications devices within the range of the network access device, if pairing is required by said at least one of the short range access communications devices; and
receiving (139, 319) an acknowledgement of said pairing request.

5. The method according to claim 4, further comprising un-pairing (137, 317) said discovered and identified short range access communication device if said discovered and identified short range access communication device required pairing and was previously paired and has not yet been un-paired.

6. The method according to any one of claims 2 to 3, further comprising displaying (120) a pop-up dialog box for user input if said network access device is not in a standby mode.

7. The method according to claim 3, wherein said information is not transmitted (307) if, upon accessing a profile of said user, a determination is made that said user does not want to receive said information during a current time period.

8. The method according to any one of claims 3 or 6 to 7, wherein said discovered and identified short range access communication device is a home automation device and said information is transmitted to said home automation device, which conveys said information to said user by causing said home automation device to behave in a particular manner.

9. The method according to any one of claims 3 or 6 to 7, wherein said discovered and identified short range access communication device is a device specifically configured for a user having a disability and said information is transmitted to said specifically configured device, which conveys said information to said user by causing said home automation device to behave in a particular manner.

10. The method according to any one of claims 1 to 3 or 6 to 9 wherein said scanning is subject to a timeout.

11. An apparatus, comprising:
means for receiving (105, 305) content at a network access device; and
means for scanning (130, 310) a local area to discover and identify at least one available short range access communication device within a range of said network access device, if said received content includes a message.

12. The apparatus according to claim 11, wherein said content is a message, said message being received during a disaster or said message being an emergency alert message provided by a content provider.

13. The apparatus according to claim 11 or 12, further comprising:
means for generating (135, 315) a list of said discovered and identified short range access communication devices within the range of said network access device; and
means for transmitting (140, 320) information associated with said message to said at least one of the short range access communication devices within the range of said network access device.

14. The apparatus according to claim 12, further comprising:
means for generating (137, 317) a pairing request;
means for providing (137, 317) an indication of said emergency alert message in said pairing request;
means for transmitting (137, 317) said pairing request, to said at least one identified short range access communications devices within the range of the network access device, if pairing is required by said at least one of the short range access communications devices;
means for receiving (139, 319) an acknowledgement of said pairing request; and
means for un-pairing (137, 317) said discovered and identified short range access communication device if said discovered and identified short range access communication device required pairing and was previously paired and has not yet been un-paired.

15. The apparatus according to claim 12 or 13 or the method according to claim 2 or 3, wherein said content provider is one of a cable content provider, a satellite content provider, a broadcast content provider, IPTV and over-the-top provider.
